# EUROPEAN PATENT APPLICATION

(11) **EP 4 755 853 A1**
(43) Date of publication of application: **10.06.2026**
(21) Application number: 25000001.5
(22) Date of filing: 02.01.2025
(51) Int. Cl.: C01G 47/00, C01G 51/82, C01G 53/82

(54) **THE METHOD OF PREPARATION OF HOMOGENOUS MIXTURE OF RHENIUM(VII) SALTS**

(30) Priority: 04.12.2024 PL 45046924
(71) Applicant: Siec Badawcza Lukasiewicz - Instytut Metali Niezelaznych, 44-100 Gliwice (PL)
(72) Inventor: Leszczynska-Sejda, Katarzyna, 41-800 ZABRZE (PL); Kopyto, Dorota, 44-100 GLIWICE (PL); Grzybek, Alicja, 44-122 GLIWICE (PL); Orda, Szymon, 44-120 PYSKOWICE (PL); Ciszewski, Mateusz, 40-755 KATOWICE (PL); Burian, Wojciech, 44-122 GLIWICE (PL); Karpinski, Marcin, 44-100 GLIWICE (PL); Hawelek, Lukasz, 47-440 GÓRKI SLASKIE (PL); Kolano-Burian, Aleksandra, 44-122 GLIWICE (PL)

(57) **Abstract**

The method for manufacturing of mixtures of rhenates(VII) of selected metals i.e. copper and/or nickel, and/or cobalt characterized in that the nickel(II) oxide of grain size from 10 to 50 nm and/or cobalt(II) oxide is added to rhenic(VII) acid of rhenium concentration ≥50 g/dm³, neutralization is carried out at 75-85°C, until pH 0.7-1.5 is achieved, non-dissolved residue is filtered and washed regularly, using 0.005-0.020 dm³ of isopropyl alcohol per each 1g, while non-dissolved residue is used for neutralization of fresh portion of rhenic(VII) acid, in such amounts that the mass of non-dissolved residue does not exceed 75%, while filtrate from filtration of non-dissolved residue is treated with copper(II) oxide, until pH 3.8-4.3 is achieved, the neutralization is carried out at 75-85°C, for 60 minutes, and non-dissolved copper residue is filtered and washed regularly using 0.005-0.020 dm³ of isopropyl alcohol per each 1 g of non-dissolved copper residue, non-dissolved copper residue from washing by isopropyl alcohol is used in neutralization of rhenic(VII) acid, after prior neutralization with nickel(II) oxide and/or cobalt(II) oxide in such amount that mass of non-dissolved copper residue does not exceed 50%, and filtrate from filtration of non-dissolved copper residue is evaporated until dry, at temperature not exceeding 85°C, thus obtained residue is dried, first at ≥150°C, for 3-6 h, then ≥190°C, for 6-12 h, until homogenous, non-hygroscopic mixture of rhenates(VII) containing ≥10% of copper, and/or nickel, and/or cobalt in total, is obtained.

## Description

The present invention concerns the method of preparation of homogenous rhenium(VII) salts. With regards to the type, composition, structure and purity, these mixtures may be good materials particularly for cumulative liners manufacturing. The mixtures are composed of rhenium as well as metals such as: copper and/or nickel, and/or cobalt.

Papers, patents and other data about manufacturing and application of individual components of the mixture addressed by this solution i.e. copper, nickel or cobalt rhenates(VII) as well as cumulative liners, can be found in literature.

First reports concerning copper(II) rhenates(VII) date back to 1931, when H.V.A. Briscoe, P.L. Robinson and A.J. Rudge described its preparation in reaction of copper(II) carbonate with rhenic(VII) acid, and in 1933 E. Wilke-Dörfurt and T. Gunzert presented hexa- and penta-hydrated forms of copper(II) rhenates(VII).

In 1951 W. Smith and G. Maxwell described synthesis of copper(II) rhenate(VII) tetrahydrate in reaction of copper hydroxide, oxide and carbonate with rhenic(VII) acid. In 1977 Zhurnal Neorganicheskoi Khimii published a paper describing preparation of Cu(ReO₄)₂·4H₂O in reaction of rhenic(VII) acid with 30% excess of copper(II) oxide. M. Varfolomeev and A. Zemenkova in 1994 examined the crystallographic structure of tetrahydrate copper(II) rhenate(VII), as well as performed thermal, thermogravimetric and X-ray powder diffraction analysis. Cu(ReO₄)₂·4H₂O was produced in reaction of 30% excess of copper(II) oxide with rhenic(VII) acid. It was showed that tetrahydrated copper(II) rhenate(VII) becomes decomposed twice, at 121°C and 158°C, producing dihydrate and anhydrous forms, respectively. The anhydrous form of copper(II) rhenate(VII), when heated at 400-500°C, becomes converted into copper(I) rhenate(VII) of tetragonal scheelite-like structure.

Crystallographic structure of Cu(ReO₄)₂(H₂O)₄ was determined in 1997 by C. Mujica. This compound was synthesized in the form of yellow crystals in reaction of rhenic(VII) acid with copper(II) oxide suspension.

Paper published in MRS Online Proceedings Library in 1996 presented magnetic properties of anhydrous copper(II) rhenate(VII).

In the late 90 of the twenty century D.S. Xiong described lubricating properties of copper(II) rhenate(VII). It was showed that copper(II) rhenate(VII) becomes dehydrated at 80-150°C, and decomposed at 510-730°C. It has good lubricating properties in the temperature range from room temperature to 700°C, however the best lubricating properties are observed at 450-600°C, when coefficient of friction is 0.15.

In 1999 M. Varfolomeev showed that crystalline tetrahydrate cobalt(II) and magnesium rhenates(VII) are isostructural with tetrahydrate copper(II) rhenate(VII).

Preparation and structure of CuReO₄ was also described in 2006 by D. Mikhailov, H. Ehrdenberg and H. Fuess. Copper(I) rhenate(VII) was produced in three ways. The first was based on preparation of a tablet composed of milled together copper(II) oxide and rhenium (VII) oxide. In the second, tablets were prepared in a glove box - by mixing stochiometric amount of copper(II) rhenate(VII) with metallic copper. Third, based on mixing copper(I) oxide with rhenium(VII) oxide in a glove box, and then tablets preparation. All tablets were placed in quartz pipes and the reactions were carried out at 500-800°C for 20-30h.

In 2010 antifriction properties of tetrahydrate copper(II) rhenate(VII) at temperature range from room to 750°C were examined, by group of L. Liu. Cu(ReO₄)₂·4H₂O was produced in reaction of copper(II) oxide and rhenium(VII) oxide.

Group of D. Mikhailova described in 2014 differences in thermal properties of AgReO₄ and CuReO₄.

Paper published in 2021 in the Journal of Industrial and Engineering Chemistry showed tribological properties of nano-size copper(II) rhenate(VII).

The patent PL 228989B1 describes preparation method of anhydrous copper(II) rhenate(VII) consisting of sorption of copper(II) ions from aqueous solutions, using highly acidic ion-exchange resin, then elution of adsorbed Cu ions by rhenium-containing acidic solutions. Results from this work were published in 2019 in Molecules journal: "Rhenium(VII) Compounds as Inorganic Precursors for the Synthesis of Organic Reaction Catalysts".

In 2024 patent application P.449060 was made concerning production of copper(II) rhenate(VII) using copper sludges from electrolytic zinc production, containing Zn, Pb, Cd, Co and Ni. Rhenic(VII) acid was a rhenium source.

Nickel(II) rhenate(VII) was also first mentioned in 1931 by H.V.A. Briscoe, P.L. Robinson and A.J. Rudge, who described synthesis of nickel(II) rhenate(VII) pentahydrate in reaction of nickel(II) carbonate with rhenic(VII) acid. Consequently, pale green crystals of Ni(ReO₄)₂·5H₂O were obtained. Dehydration of nickel(II) rhenate(VII) was observed at 170°C, when the compound changed the color into yellow.

W.T. Smith and G.E. Maxwell in 1949 described a method for preparation of nickel(II) rhenate(VII) from nickel(II) carbonate or hydroxide with rhenic(VII) acid. Tetrahydrate (green), dihydrate (pale green) and nonaqueous (yellow) nickel(II) rhenates(VII) were obtained. The colors and solubilities of all mentioned forms were determined as well as density of Ni(ReO₄)₂·4H₂O only, which resulted in 3.95 g/cm³.

In 1950 N.C. Bowen described preparation of nickel(II) rhenate(VII) using nickel(II) carbonate and rhenic(VII) acid produced from fumes, at 300°C in oxygen atmosphere.

In 1972 C. Laragne group performed thermal decomposition of nickel(II) rhenate(VII).

In 1978 L. Zajtseva, A. Velichko and V. Zotov obtained and described physico-chemical properties of tetrahydrate nickel(II) rhenate(VII). Ni(ReO₄)₂·4H₂O was produced in neutralization of nickel(II) carbonate by rhenic(VII) acid. It was showed that tetrahydrate, dehydrated, and anhydrous nickel(II) rhenate(VII) is isostructural with the respective pertechnetates.

Composition of gas phase and thermal decomposition of Ni(ReO₄)₂ in vacuum were presented in Zhurnal Obshchei Khimii in 1980. It was found out that nickel(II) rhenate(VII) does not form a stable gas phase and decomposes to NiO and Re₂O₇.

In 1990 Zhurnal Neorganicheskoi Khimii published results of x-ray structure analysis indicating lattice parameters of nickel(II) rhenate(VII). It was established that nickel(II) rhenate(VII) has hexagonal structure of a Zr(MoO₄)₂ type and is isostructural with Mg(ReO₄)₂.

Nickel(II) rhenate(VII) was examined in 1995 by W.M. Reiff, who determined its three-dimensional ground states and ferromagnetic properties as well as Curie temperature for Ni(ReO₄)₂ at 12.5 K with a significant coherence at 4.2 K.

In the late 90 of the twenty century, C.C. Torardi examined magnetic properties of anhydrous nickel(II) rhenate(VII). It was found that Ni(ReO₄)₂ is ferromagnetic with a trigonal symmetry. Nickel(II) rhenate(VII) revealed ferromagnetic properties also below 12 K with a phase change between room temperature and 77 K.

In 1998 A. Butz group analyzed crystalline structure of anhydrous nickel(II) rhenate(VII). The compound was prepared in the result of 24 h dehydration of tetra- and di-hydrated nickel(II) rhenate(VII). The green color of obtained compound became more intense with loss of subsequent hydration water molecules. The complete decomposition of Ni(ReO₄)₂ was observed at 882°C.

In 2003-2024 several papers and patents were published in Poland by K. Leszczyńska-Sejda et al., focused on preparation and application of nickel(II) rhenate(VII).

Thus, in the PL 209878 patent the method for anhydrous nickel(II) rhenate(VII) production for application in Ni-Re alloys production, was described. Nickel(II) rhenate(VII) was obtained by neutralization of rhenic(VII) acid with nickel(II) oxide, hydroxide or carbonate. Produced solution of pH minimum 5 was evaporated to precipitate Ni(ReO₄)₂ hydrate. Hydrated nickel(II) rhenate(VII) was dried at temperature range 100-160°C.

The PL209878 patent describes the method for industrial production of anhydrous Ni(ReO₄)₂, which can be obtained in reaction of rhenic(VII) acid, containing 15-500 g/dm³ Re, with commercial nickel compounds, such as NiO, Ni(OH)₂ and Ni(CO₃)₂, used in significant stochiometric excess. Produced solution of pH minimum 5 is evaporated until dry to produce hydrated nickel(II) rhenate(VII). The hydrated nickel(II) rhenate(VII) is then dried at 100-160°C. The described method allows to manage all waste liquid and solid streams and produces anhydrous nickel(II) rhenate(VII), which contains minimum 10.5% Ni and 66.5% Re, eliminating nickel and rhenium losses. Commercial compounds are the source of nickel.

In the PL211592 patent the method of Ni-Re alloy powder manufacturing was described, using nickel(II) rhenate(VII) in the form of: Ni(ReO₄)₂, Ni(ReO₄)₂·2H₂O and/or Ni(ReO₄)₂·4H₂O. The purpose of the production of nickel(II) rhenate(VII) for alloy powders, which can be applied in aviation and arms industry, or catalysis - makes it necessary to produce high purity Ni(ReO₄)₂ of a contamination content limited by the future application.

In patent PL223066 the production of anhydrous nickel(II) rhenate(VII) using ion exchange was described. Nickel(II) ions from nickel(II) salt (sulfates and nitrates) are sorbed using highly acidic resin and subsequently eluted by rhenic(VII) acid of concentration 400-900 g/dm³ Re. This method allows to obtain product with 10.5% Ni and 66.6% Re; commercial compounds are the source of nickel.

In the paper published in Materials journal in 2017 by K. Leszczyńska-Sejda, G. Benke, D. Kopyto, T. Majewski, M. Drzazga, "Production of High-Purity Anhydrous Nickel(II) Perrhenate for Tungsten-Based Sintered Heavy Alloys" the method for high purity anhydrous nickel(II) rhenate(VII) production was described. Nickel(II) ions from solution resulting from dissolution of commercial nickel(II) nitrate(V) were sorbed with highly acidic ion exchange resin C160, and eluted with rhenic(VII) acid of Re concentration 400-900 g/dm³. The produced solution was neutralized by commercial nickel(II) oxide. Then the solution was evaporated and dried to produce anhydrous compound. Anhydrous nickel(II) rhenate(II) is used to produce Re-Ni powder. This powder is a precursor for production of heavy alloys, 77W-20Re-3Ni.

In 2013 in Proceedings of the European Metallurgical Conference EMC paper Hydrometallurgical methods for production of Ni(ReO₄)₂ and Co(ReO₄)₂, by K. Leszczyńska-Sejda et al. was published, concerning application of ion exchange for preparation of, among others, Ni(ReO₄)₂. Paper was re-printed in World of Metallurgy - ERZMETALL in the same year.

In 2016 T. Majewski and K. Leszczyńska-Sejda, in a paper published in Solid State Phenomena "Investigation of Application Possibilities of Re-Ni Alloy Power to Tungsten Heavy Alloys Production" described preparation of Re-Ni alloy powders from nickel(II) rhenate(VII).

In 2013 A. Wrona in the paper "Sferyczne Proszki ze Stopów Renu z Kobaltem z Niklem" published in Rudy i Metale Niezelazne described preparation of spherical rhenium powders with nickel additives, by plasma spraying. Rhenium-based alloy powders produced by reduction e.g. nickel(II) rhenate(VII) were used as precursors. This compound was obtained by ion exchange. In 2014 K. Leszczynska-Sejda et al. Niezelazne in the paper "Otrzymywanie Zwi 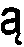 zków Renu(VII) S 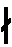 uż 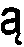 cych do Wytwarzania Proszków Stopowych" published in in Rudy i Metale showed the method for various rhenates(VII) production, including nickel(II), also using ion-exchange method.

In the Biuletyn Wojskowej Akademii Technicznej (WAT) in 2016 a paper about nickel(II) rhenate(VII) application for tetraminanickel(II) rhenate(VII) production was published, as a perspective raw material for Re-Ni alloys powders manufacturing for military applications.

In 2017 K. Leszczyńska-Sejda, G. Benke, D. Kopyto, T. Majewski and M. Drzazga published paper "Production of High-Purity Anhydrous Nickel(II) Perrhenate for Tungsten-Based Sintered Heavy Alloys", depicting production of high purity anhydrous nickel(II) rhenate(VII) used in production of W-Re-Ni heavy sinter. Nickel(II) rhenate(VII) was produced using ion exchange method.

In 2023 group of K. Leszczyńska-Sejda made patent application P.444211 and published paper entitled: "A New Method of Obtaining High Purity Nickel(II) Perrhenate from Waste" in Crystals journal, MDPI, about the method for production of nickel(II) rhenate(VII) from waste of national copper industry, i.e. nickel sulfate intermediate containing >16% Ni in the form of NiSO₄·H₂O with/or without addition of: NiO₂, NiO, NiS₂ and/or Ni₃S₄ and up to 5% metallic contaminations. Patent was granted in 2024.

In 2024 a group of K. Leszczyńska-Sejda made patent application P.448858 for manufacturing of nickel(II) rhenate(VII) using aqueous multicomponent sulfate or chloride solutions, containing minimum 1.0 g/dm³ Ni and Co, Fe, Cu, Mn, Al, Li and Cr, from which nickel was precipitated in form of Ni(OH)₂ and aqueous solution of rhenic(VII) acid of concentration minimum 200 g/dm³. Reaction was carried out till pH >6.3 was achieved. Mixture was then evaporated to dry mass at temperature limited to 65°C, and solid product of hydrated nickel(II) rhenate(VII) was dried at 200°C to dry mass. Produced anhydrous nickel(II) rhenate(VII) residue was stored in air-sealed conditions.

First reports concerning preparation of cobalt(II) rhenate(VII were developed in the 30 of the twenty century by H.V.A. Briscoe, P.L. Robinson and A.J. Rudge, who synthesized this compound in reaction of cobalt(II) carbonate and rhenic(VII) acid.

In 1949 W. Smith and G. Maxwell produced Co(ReO₄)₂·4H₂O in reaction of cobalt(II) carbonate and hydroxide with rhenic(VII) acid. Co(ReO₄)₂·4H₂O was placed in desiccator over calcium chloride producing Co(ReO₄)₂·3H₂O. Total dehydration was achieved after drying at 105°C only. Additionally, solubility of all forms at 27°C was determined, as well as freezing point of Co(ReO₄)₂ and density of Co(ReO₄)₂, Co(ReO₄)₂·4H₂O.

In 1978 L. Zajtseva defined composition and physico-chemical properties of Co(ReO₄)₂ and Co(ReO₄)₂·4H₂O. Tetrahydrate cobalt(II) rhenate(VII) was produced in reaction of basic cobalt(II) carbonate and rhenic(VII) acid.

In 1990 Zhurnal Neorganicheskoi Khimii published a paper presenting symmetry and crystal lattice parameters for anhydrous cobalt(II) rhenate(VII). It was stated that this compound is isostructural with Mg(ReO₄)₂ and crystallizes in hexagonal system of Zr(MoOa)2 type.

In 1992 W. Baur, W. Joswig, G. Pieper and D. Kassner determined crystalline structure of cobalt(II) rhenate(VII). It was found that through ordering of two cations Co(ReO₄)₂ has rutile-like structure.

Influence of aqueous ammonia solution on crystalline cobalt(II) rhenate(VII) pentahydrate was examined by L. Maslova in 1994.

Paper published in 1995 in Molecular Crystals and Liquid Crystals presented isolating layers in ferromagnets composed of, among others, Co(ReO₄)₂.

In the same year a group of A. Butz prepared and determined crystal structure of cobalt(II) rhenate(VII) tetrahydrate. Co(ReO₄)₂·4H₂O was obtained in reaction of cobalt(II) carbonate with rhenic(VII) acid, where carbonate was used in 20% excess. Two dehydration stages can be observed below 200°C (I dehydration - 120-130°C, II dehydration - 165-175°C) and in each stage two hydrating water molecules are lost. They also determined decomposition temperature range at 840-930°C.

In 1997 C. Toradi examined magnetic properties of anhydrous cobalt(II) rhenate(VII).Ferromagnetic properties were observed.

Crystal structure of anhydrous cobalt(II) rhenate(VII) was determined in 1998 by A. Butz, G. Miehe, H. Paulus, P. Strauss and H. Fuess. Co(ReO₄)₂ was formed by dehydration of the hydrated form. Thermal analysis showed that in small temperature range between Co(ReO₄)₂·4H₂O and Co(ReO₄)₂·2H₂O, the trihydrate form exists. The study implies that Co(ReO₄)₂·3H₂O is agglomerated to Co₂(ReO₄)₄·6H₂O.

C. Mujica in 1998 examined and determined crystalline structure of Co(ReO₄)₂(H₂O)₄. Compound was obtained adding rhenic(VII) acid to cobalt(II) carbonate. Filtration and slow evaporation produced dark red Co(ReO₄)₂(H₂O)₄ crystals. Analysis revealed that cobalt ion is octahedrally surrounded by two rhenate(VII) anions and four water molecules.

In 1999 M. Varfolomeev presented crystalline structure of tetrahydrate cobalt(II) rhenate(VII). It was showed that single crystals are triclinic and isostructural with Cu(ReO₄)₂·4H₂O.

In 2010 group of L. Liu examined antifriction properties of tetrahydrate cobalt(II) rhenate(VII) in temperature range from room one up to 750°C. Co(ReO₄)₂·4H₂O was produced in reaction of CoO with Re₂O₇. The friction coefficient for tetrahydrate cobalt(II) rhenate(VII) presented downward trend with an increase in temperature, and good lubricating properties are retained with temperature decrease.

J. Wang in 2018 produced composite of Co(ReO₄)₂/MoS₂ as an additive to enhance lubricating properties of oil and reducing friction. Studies were performed up to 600°C. It was stated that above 450°C cobalt(II) rhenate(VII) plays a main role as friction reducing component.

Patent PL223067B1 describes a method for production of high purity anhydrous cobalt(II) rhenate(VII) using ion exchange and cobalt(II) soluble salts solutions. Cobalt(II) ions from solutions of soluble cobalt(II) salts were sorbed using highly acidic cation exchange resin and subsequently eluted with rhenic(VII) acid. Next the solution was evaporated until dry, and hydrated salt was dried in multistage operation to produce its anhydrous form. Drying was performed first in the range 100 do 130°C in three hours, producing partially hydrated cobalt(II) rhenate, which was then comminuted to cobalt(II) rhenate(VII) of grain size below 500 µm. This material was further dried at 150-170°C to constant mass producing anhydrous cobalt(II) rhenate(VII), which was stored in glass thermo-resistant container and dried for half hour at temperature not higher than 130°C.

Patent application from 2024 P448858 described preparation of cobalt(II) rhenate(VII) through reaction of cobalt(II) compounds with rhenic(VII) acid, which produced cobalt-rhenium solution, used for separation of cobalt(II) rhenate(VII). Multicomponent sulfate or chloride solutions with minimum 2.5 g/dm³ Co and Ni, Fe, Cu, Mn, Al, Li, or Cr were used as cobalt source. Results were also published in Crystals journal in the paper "Hydrometallurgical Technology for Producing Rhenium(VII) and Cobalt(II) from Waste".

In 2019 the paper "Application of Ion Exchange for Preparation of Selected Metal Perrhenates-Precursors for Superalloy Production" was published in Metals journal presenting results of cobalt(II) rhenate(VII), nickel(II) rhenate(VII) and their mixture separation, with nickel and cobalt, respectively, using solutions obtained by ion exchange method.

With respect to cumulative liners the patent application US 20200378730 presented the method for preparation of coatings on copper cumulative liners. Coatings were made of metal, metal oxide, plastic, ceramics or their mixtures. Tungsten, molybdenum, silver, tantalum, lead, platinum or their mixtures, were used for coatings manufacturing. Coatings were prepared by gas condensation, spraying or electrodeposition.

Patent US 3838643 describes the positive effect of a coating applied on cumulative liner made of low carbon steel, i.e. mild steel, with triple layer coatings: copper, nickel and chromium. The outer chromium layer brought corrosion resistance and allowed to limit other layers.

In patent application US 2024/0210148 double layer cumulative liners preparation was described, where inner layer is composed of metals such as: copper, molybdenum, nickel or their alloys, while outer layers are thermoplastic polymers (PTFE, PEEK) or thermosetting polymers (polyurethane, epoxide). Selected metals of inner layer have appropriate density, high plasticity, high sound speed and are cheaper in comparison to other heavy metals.

In 2010 in Journal of Materials Science & Technology published a paper presenting production of Cu-Ni-W alloys for cumulative liners. Alloys were produced on copper cathodes and platinum was used in anode. Cathode surface was prepared in 4 steps: degreasing in organic solvent, water washing, digestion, and chemical polishing in acid solution. The bath for alloy coating electrowinning was composed of: NiSO₄·7H₂O - 0.05 mol/dm³, Na₂WO₄·2H₂O - 0.15 mol/dm³, CuSO₄·5H₂O - 0.005 mol/dm³, Na₃C₆H₅O₇·2H₂O - 0.2 mol/dm³ and organic additive (saccharin). Process was performed with bath pH of 6.5, temperature 55°C and current density in range 5-15 A/dm² for 30 min.

In 2015 in Journal of Thermal Spray Technology described a method for Al-Ni coatings preparation on copper cumulative liners by kinetic spraying.

Similar studies were performed by S. Lee in 2018. Properties of double layer cumulative liners produced by kinetic spraying with Al and Al-Ni coatings were described. Copper was the base material of the liner.

Patent US 4766813 presents a method for isotropic coatings on metallic surface of cumulative liners produced from ductile metals such as: copper, nickel, zinc, aluminum, tantalum, tungsten, uranium, antimony, magnesium and their alloys and mixtures. Coating can be produced either by electrowinning, spraying or chemical vapor deposition (CVD).

In the patent PL187841 from 1998 copper sinters of programmed porosity in range from 7 to 17% were used for cumulative liners manufacturing.

Patent application P.440160 from 2022 described the method of production of Cu-OFE alloy tape dedicated mostly for cumulative liners. Ther production of tapes using copper of Cu-OFE grade is performed by cold-rolling. After casting the tape it is cold rolled with a simultaneous cooling of rolls below 15°C, the maximum strain 10%, with tension and counter-tension up to 0.1 of plasticity barrier of copper till final thickness is obtained, and then the tape is roasted in protecting atmosphere at 280-300°C, for 1h.

The essence of this invention lies in the method of preparation of mixtures of selected metals (i.e. copper and/or nickel and/or cobalt) rhenates(VII), characterized by introduction of nickel(II) oxide of a grain size in a range from 10 to 50 nm and/or cobalt(II) oxide into the rhenic(VII) acid of a concentration 50g/cm³. Neutralization is carried out at 75-85°C until pH 0.7-1.5 is achieved, and non-dissolved residue is filtered out and washed regularly, using 0.005-0.020dm³ of isopropyl alcohol per 1g of residue. Non-dissolved residue is recycled to neutralization of fresh rhenic(VII) acid in such amounts that the mass of non-dissolved residue does not exceed 75%. The filtrate from filtration of non-dissolved residue is treated with copper(II) oxide until pH 3.8-4.3 is achieved. Neutralization is carried out at 75-85°C for next 60 minutes, while non-dissolved copper residue is filtered and washed regularly, using 0.005-0.020dm³ isopropyl alcohol per 1g of the residue. Non-dissolved copper residue, after washing with isopropyl alcohol, is reverted to neutralization of rhenic(VII) acid, after its prior neutralization with nickel(II) oxide and/or cobalt(II) oxide in such amounts that the mass of non-dissolved copper residue does not exceed 50%. The filtrate from filtration of non-dissolved copper residue is evaporated until dry at temperature not higher than 85°C, the produced residue is dried first at ≥150°C for 3-6h, then in temperature ≥190°C for 6-12h, until homogenous, non-hygroscopic mixture of rhenates(VII) is obtained, containing more than 10% copper and/or nickel and/or cobalt, in total. Neutralization is carried out using rhenic(VII) acid of a concentration favorably 61.5g/dm³ Re. Rhenic(VII) acid neutralization is carried out with nickel(II) oxide of grain size favorably 14nm.

Non-dissolved residue from neutralization with nickel(II) oxide is reverted to the next neutralization of fresh portion of rhenic(VII) acid, in such amount that mass of non-dissolved residue was 50 %.

Non-dissolved residue from neutralization with cobalt(II) oxide is reverted to the next neutralization of fresh portion of rhenic(VII) acid, in such amount that mass of non-dissolved residue was 30 %.

Neutralization with nickel(II) oxide is favorably carried out always in the first place, until pH 0.85 is achieved.

Neutralization with cobalt(II) oxide is carried out until pH 1.3 is achieved.

Final neutralization is carried out using copper(II) oxide until pH 4.10 is achieved.

Filtration of non-dissolved residues from neutralization with nickel(II) or cobalt(II) or copper(II) oxide is favorably carried out in hot conditions.

Three-stage neutralization is carried out using subsequently nickel(II) oxide, cobalt(II) oxide, and copper(II) oxide.

Alcohol washings from washing of non-dissolved residues from nickel(II) oxide neutralization are favorably reverted, to wash fresh residue from neutralization by nickel(II) oxide, for minimum 30 cycles.

Alcohol washings from washing of non-dissolved residues from cobalt(II) oxide neutralization are favorably reverted, to wash fresh residue from neutralization by cobalt(II) oxide, for minimum 30 cycles.

Alcohol washings from washing of non-dissolved copper residues from neutralization by copper(II) oxide are favorably reverted to wash fresh copper residue from neutralization by copper(II) oxide, for minimum 50 cycles.

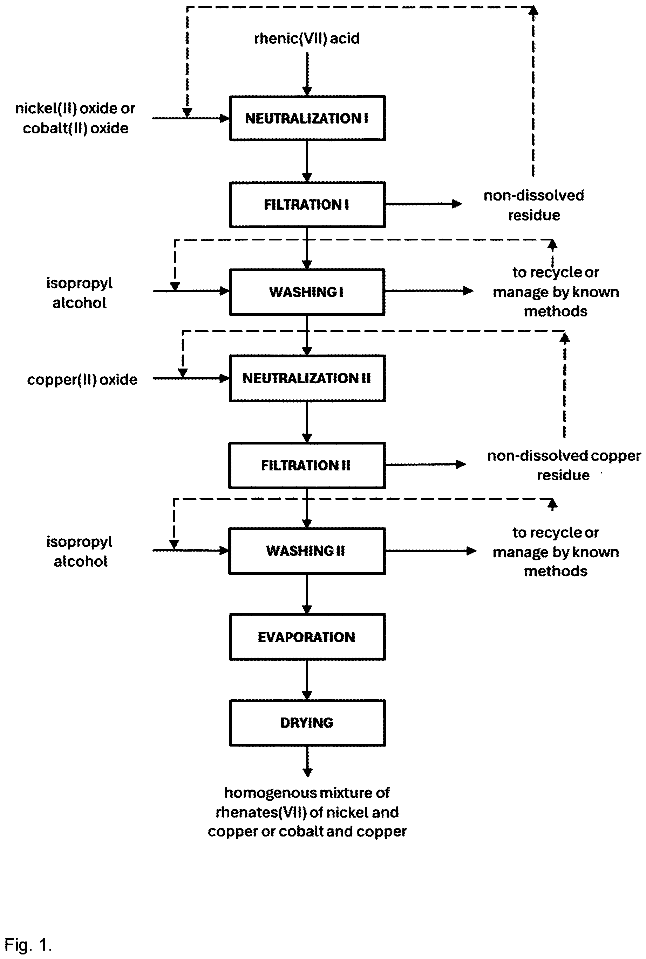

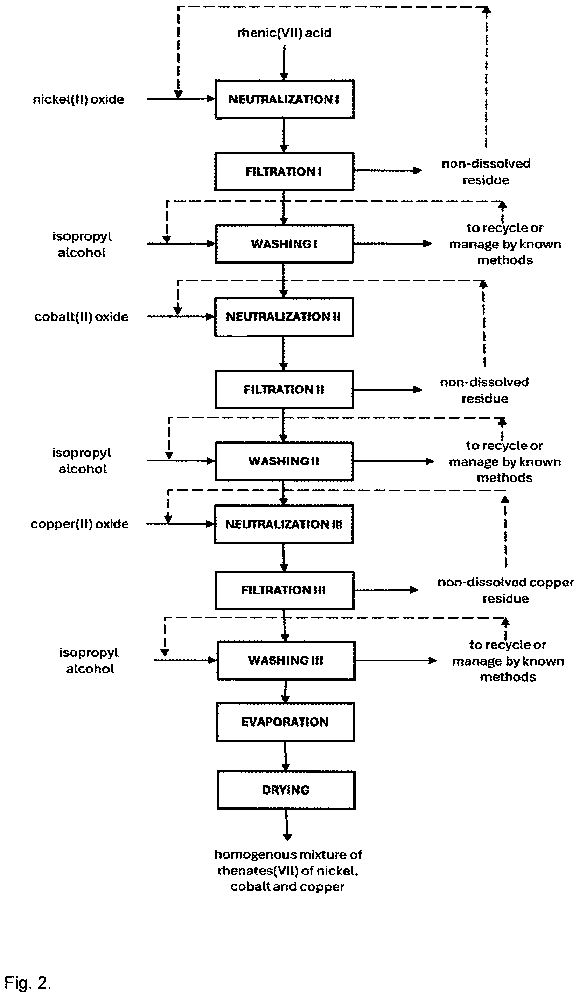

Scheme of homogenous, non-hygroscopic mixture of Cu and Ni, Cu and Co rhenium(VII) salt precipitation is presented in Fig. 1, while precipitation of homogenous rhenium(VII) salt with Ni, Co and Cu was presented in Fig.2.

The invention has been presented in the following examples of application.

### Example 1

Into 0.100 dm³ of rhenic(VII) acid of Re concentration 61,5 g/dm³ 1.5 g nickel(II) oxide, of a particle size 14 nm was slowly added in portions, reaction was carried out at 80°C, till pH achieved 0.85. Then, non-dissolved nickel residue was separated by hot vacuum filtration. In this way the non-dissolved nickel residue of mass 1.12 g and 0.108 dm³ of filtrate containing: 56.67 g/dm³ Re and 3.40 g/dm³ Ni were obtained. Non-dissolved residue was washed with 0.012 dm³ of anhydrous isopropanol on filter and then used in neutralization of fresh portion of rhenic(VII) acid. Alcohol washings of a volume 0.014 dm³ from washing on non-dissolved residue were used in washing of other non-dissolved nickel residues. 1.5 g copper(II) oxide was added to the filtrate, at 80°C, till pH 4,00 was achieved, and then it was mixed for 120 minutes, at the same temperature, reaching final pH at level 4.10. Consequently non-dissolved copper residue was separated by hot vacuum filtration. This allowed to produce non-dissolved copper residue of a mass 0.80 g and 0.106 dm³ of filtrate obtained from filtration of non-dissolved copper residue, containing: 57.55 g/dm³ Re, 3.40 g/dm³ Ni and 5.30 g/dm³ Cu. Non-dissolved residue was washed with 0,016 dm³ anhydrous isopropanol and then used in neutralization of rhenic(VII) acid. Alcohol washings of a volume 0.018 dm³, from washing on non-dissolved copper residue, were used in washing of other non-dissolved copper residues. The filtrate from filtration of non-dissolved copper residue was evaporated until dry at 85°C. Produced residue was dried at 160°C for 5 hours and then at 195°C, for 12 hours until homogenous, non-hygroscopic mixture of copper and nickel rhenates(VII) of mass 9.22 g, containing 3.98% Ni and 6.10% Cu, was obtained.

### Example 2

Into 0.100 dm³ of rhenic(VII) acid of Re concentration 50.0 g/dm³ 1.5 g of cobalt(II) oxide was slowly added in portions, reaction was carried out at 75°C until pH reached 1.30. Then, non-dissolved residue was separated by hot vacuum filtration. In this way the non-dissolved cobalt residue of mass 1.00 g and 0.107 dm³ of filtrate from filtration of non-dissolved cobalt residue containing: 57.01 g/dm³ Re and 4.40 g/dm³ Co were produced. Non-dissolved cobalt residue was washed with 0.005 dm³ of anhydrous isopropanol on filter and then used in neutralization of fresh portion of rhenic(VII) acid. Alcohol washings of a volume 0.007 dm³ from washing on non-dissolved residue were used in washing of other non-dissolved cobalt residues. 1.5 g of copper(II) oxide was added to the filtrate, at 80°C, till pH 3.80 was achieved, and then it was mixed for 180 minutes, at the same temperature, reaching final pH at level 4.15. Consequently non-dissolved copper residue was separated by hot vacuum filtration. This allowed to produce non-dissolved copper residue of a mass 0.96 g and 0.110 cm³ offiltrate obtained from filtration of non-dissolved copper residue, containing: 55.45 g/dm³ Re, 4.40 g/dm³ Co and 4.80 g/dm³ Cu. Non-dissolved residue was washed with 0,007 dm³ of anhydrous isopropanol and then used in neutralization of rhenic(VII) acid. Alcohol washings of a volume 0.009 dm³ from washing on non-dissolved copper residue were used in washing of other non-dissolved copper residues. The filtrate from filtration of non-dissolved copper residue was evaporated until dry at 80°C. Produced residue was dried at 160°C, for 6 hours and then at 200°C, for minimum 8 hours until homogenous, non-hygroscopic mixture of copper and cobalt rhenates(VII) of mass 9.22 g, containing 5.13% Co and 5.75% Cu, was obtained.

### Example 3

Into 0.100 dm³ of rhenic(VII) acid of Re concentration 100 g/dm³ 2.0 g of nickel(II) oxide, of a particle size 50 nm, was slowly added in portions, reaction was carried out at 82°C, till pH achieved 0.7. Then, non-dissolved residue was separated by hot vacuum filtration. In this way the non-dissolved nickel residue of mass 1.45 g and 0.115 dm³ of filtrate from filtration of non-dissolved nickel residue, containing: 86.96 g/dm³ Re and 4.12 g/dm³ Ni were produced. Non-dissolved residue was washed with 0.029 dm³ anhydrous isopropanol on filter and then used in neutralization of fresh portion of rhenic(VII) acid. Alcohol washings of a volume 0.030 dm³ from washing on non-dissolved nickel residue were used in washing of other non-dissolved nickel residues. 2.0 g of cobalt(II) oxide was added to the filtrate, at 80°C, till pH 1.50 was achieved. Consequently non-dissolved cobalt residue was separated by hot vacuum filtration. This allowed to produce non-dissolved cobalt residue of a mass 1.25 g and 0.110 cm³ of filtrate obtained from filtration of non-dissolved cobalt residue, containing: 89.29 g/dm³ Re, 4.12 g/dm³ Ni and 4.55 g/dm³ Co. Non-dissolved cobalt residue was washed with 0,007 dm³ of anhydrous isopropanol and then used in neutralization of rhenic(VII) acid. Alcohol washings of a volume 0.008 dm³ from washing on non-dissolved cobalt residue were used in washing of other non-dissolved cobalt residues. Then, 2.0 g copper(II) oxide was added to filtrate, reaction was carried out at 85°C, till pH reached 4.20, then it was mixed for 60 minutes, at the same temperature, obtaining final pH 4.30. Consequently non-dissolved copper residue was separated by hot vacuum filtration. This allowed to produce non-dissolved copper residue of a mass 1.42 g and 0.112 dm³ of filtrate obtained from filtration of non-dissolved copper residue, containing: 89.29 g/dm³ Re, 4.12 g/dm³ Ni, 4.55 g/dm³ Co and 5.55 g/dm³ Cu. Non-dissolved residue was washed with 0,028 dm³of anhydrous isopropanol and then used in neutralization of rhenic(VII) acid. Alcohol washings of a volume 0.030 dm³ from washing on non-dissolved copper residue were used in washing of other non-dissolved copper residues. The filtrate from filtration of non-dissolved copper residue was evaporated until dry at 80°C. Produced residue was dried at 170°C, for 4 hours and then at 195°C, for minimum 10 hours until homogenous, non-hygroscopic mixture of nickel, copper and cobalt rhenates(VII) of mass 15.06 g, containing 3.15% Ni 3.32% Co and 4.13% Cu, was obtained.

### Example 4

Into 0.100 dm³ of rhenic(VII) acid of Re concentration 61.5 g/dm³ 1.5 g of nickel(II) oxide, of a particle size 10 nm, was slowly added in portions, reaction was carried out at 80°C, till pH achieved 1.50. Then, non-dissolved residue was separated by hot vacuum filtration. In this way the non-dissolved nickel residue of mass 0.80 g and 0.109 dm³ of filtrate from filtration of non-dissolved nickel residue containing: 55.96 g/dm³ Re and 4.12 g/dm³ Ni were produced. Non-dissolved residue was washed with 0.012 dm³ of anhydrous isopropanol on filter, including 0,009 dm³ isopropanol from recycling and then used in neutralization of fresh portion of rhenic(VII) acid. Alcohol washings of a volume 0.014 dm³ from washing on non-dissolved residue were used in washing of other non-dissolved nickel residues. 1.5 g of copper(II) oxide was added to the filtrate, at 80°C, till pH 4,12 was achieved, and then was mixed for 60 minutes, at the same temperature, reaching final pH at level 4.22. Consequently non-dissolved copper residue was separated by hot vacuum filtration. This allowed to produce non-dissolved copper residue of a mass 0.72 g and 0.112 dm³ of filtrate obtained from filtration of non-dissolved copper residue, containing: 54.46 g/dm³ Re, 4.12 g/dm³ Ni and 4.96 g/dm³ Cu. Non-dissolved residue was washed with 0.010 dm³ of anhydrous isopropanol on filter, including 0.005 dm³ from recycle and then used in neutralization of rhenic(VII) acid. Alcohol washings of a volume 0.011 dm³ from washing on non-dissolved copper residue were used in washing of other non-dissolved copper residues. the filtrate from filtration of non-dissolved copper residue was evaporated until dry at 80°C. Produced residue was dried at 150°C, for 3 hours and then at 200°C, for 6 hours until homogenous, non-hygroscopic mixture of copper and nickel rhenates(VII) of mass 9.16 g, containing 4.90% Ni and 6.06% Cu, was obtained.

### Example 5

Into 0.100 dm³ of rhenic(VII) acid of Re concentration 300.0 g/dm³ 6.0 g of cobalt(II) oxide was slowly added in portions, reaction was carried out at 75°C, till pH achieved 0.70. Then, non-dissolved cobalt residue was separated by hot vacuum filtration. In this way the non-dissolved cobalt residue of mass 4.56 g and 0.105 dm³ of filtrate from filtration of non-dissolved cobalt residue, containing 285.70 g/dm³ Re and 17.60 g/dm³ Co were produced. Non-dissolved residue was washed with 0.091 dm³ of anhydrous isopropanol on filter, including 0,045 dm³from recycling, and then used in neutralization of fresh portion of rhenic(VII) acid. Alcohol washings of a volume 0.048 dm³ from washing on non-dissolved residue were used in washing of other non-dissolved cobalt residues. 6.0 g of copper(II) oxide was added to the filtrate, at 80°C, till pH 3.96 was achieved, and then was mixed for 180 minutes, at the same temperature, reaching final pH at level 4.10. Consequently non-dissolved copper residue was separated by hot vacuum filtration. This allowed to produce non-dissolved copper residue of a mass 2.5 g and 0.106 cm³ of filtrate obtained from filtration of non-dissolved copper residue, containing: 273.58 g/dm³ Re, 17.60 g/dm³ Co and 28.20 g/dm³ Cu. Non-dissolved residue was washed with 0.012 dm³ anhydrous isopropanol on filter, including 0.004 from recycling, and then used in neutralization of rhenic(VII) acid. Alcohol washings of a volume 0.012 dm³ from washing on non-dissolved copper residue were used in washing of other non-dissolved copper residues. The filtrate from filtration of non-dissolved copper residue was evaporated until dry at 80°C. Produced residue was dried at 150°C, for 3 hours and then at 200°C, for 6 hours until homogenous, non-hygroscopic mixture of copper and cobalt rhenates(VII) of mass 45.15 g, containing 4.12% Co and 6.55% Cu, was obtained.

### Example 6

Into 0.100 dm³ of rhenic(VII) acid of Re concentration 100.0 g/dm³ 2.0 g of nickel(II) oxide, of a particle size 20 nm, was slowly added in portions, reaction was carried out at 82°C, till pH achieved 1.5. Then, non-dissolved residue was separated by hot vacuum filtration. In this way the non-dissolved nickel residue of mass 1.46 g and 0.115 dm³ of filtrate from filtration of non-dissolved nickel residue, containing: 86.96 g/dm³ Re and 4.35 g/dm³ Ni were produced. Non-dissolved residue was washed with 0.008 dm³ anhydrous isopropanol on filter, including 0.004 dm³ from recycling, and then used in neutralization of fresh portion of rhenic(VII) acid. Alcohol washings of a volume 0.009 dm³ from washing on non-dissolved nickel residue were used in washing of other non-dissolved nickel residues. 2.0 g of cobalt(II) oxide was added to the filtrate, at 80°C, till pH 1.50 was achieved. Consequently non-dissolved cobalt residue was separated by hot vacuum filtration. This allowed to produce non-dissolved cobalt residue of a mass 1.24 g and 0.110 cm³ of filtrate obtained from filtration of non-dissolved cobalt residue, containing: 90.91 g/dm³ Re, 4.35 g/dm³ Ni and 4.53 g/dm³ Co. Non-dissolved cobalt residue was washed with 0,015 dm³ of anhydrous isopropanol on filter, including 0.011 dm³ from recycling, and then used in neutralization of rhenic(VII) acid. Alcohol washings in a volume of 0.016 dm³ from washing on non-dissolved cobalt residue were used in washing of other non-dissolved cobalt residues. Then, 2.0 g copper(II) oxide was added to filtrate, reaction was carried out at 84°C, till pH reached 4.21, then it was mixed for 75 minutes, at the same temperature, obtaining final pH 4.26. Consequently non-dissolved copper residue was separated by hot vacuum filtration. This allowed to produce non-dissolved copper residue of a mass 1.25 g and 0.112 dm³ of filtrate obtained from filtration of non-dissolved copper residue, containing: 89.29 g/dm³ Re, 4.35 g/dm³ Ni, 4.53 g/dm³ Co and 5.54 g/dm³ Cu. Non-dissolved residue was washed with 0,015 dm³ anhydrous isopropanol and then used in neutralization of rhenic(VII) acid. Alcohol washings of a volume 0.016 dm³ from washing on non-dissolved copper residue were used in washing of other non-dissolved copper residues. The filtrate from filtration of non-dissolved copper residue was evaporated until dry at 83°C. Produced residue was dried at 170°C, for 5 hours and then at 190°C, for minimum 12 hours until homogenous, non-hygroscopic mixture of nickel, copper and cobalt rhenates(VII) of mass 15.06 g, containing 3.32% Ni 3.31% Co and 4.12% Cu, was obtained.

## Claims

1. The method for manufacturing of mixtures of rhenates(VII) of selected metals i.e. copper and/or nickel, and/or cobalt **characterized in that** the nickel(II) oxide of grain size from 10 to 50 nm and/or cobalt(II) oxide is added to rhenic(VII) acid of rhenium concentration ≥50 g/dm³, neutralization is carried out at 75-85°C, until pH 0.7-1.5 is achieved, non-dissolved residue is filtered and washed regularly, using 0.005-0.020 dm³ of isopropyl alcohol per each 1g, while non-dissolved residue is used for neutralization of fresh portion of rhenic(VII) acid, in such amounts that the mass of non-dissolved residue do not exceed 75%, while filtrate from filtration of non-dissolved residue is treated with copper(II) oxide, until pH 3.8-4.3 is achieved, the neutralization is carried out at 75-85°C, for 60 minutes, and non-dissolved copper residue is filtered and washed regularly using 0.005-0.020 dm³ of isopropyl alcohol per each 1 g of non-dissolved copper residue, non-dissolved copper residue from washing by isopropyl alcohol is used in neutralization of rhenic(VII) acid, after its prior neutralization with nickel(II) oxide and/or cobalt(II) oxide in such amount that mass of non-dissolved copper residue does not exceed 50%, and filtrate from filtration of non-dissolved copper residue is evaporated until dry, at temperature not exceeding 85°C, thus obtained residue is dried, first at ≥150°C, for 3-6 h, then ≥190°C, for 6-12 h, until homogenous, non-hygroscopic mixture of rhenates(VII) containing ≥10% copper, and/or nickel, and/or cobalt in total, is obtained.

2. The method according to claim 1, **characterized in that** the neutralization is done with rhenic(VII) acid containing favorably 61.5 g/dm³ Re.

3. The method according to claim 1, 2, **characterized in that the** neutralization of rhenic(VII) acid is carried out with nickel(II) oxide of grain size favorably 14 nm.

4. The method according to claim 1, 2, 3, **characterized in that the** non-dissolved residue from neutralization with nickel(II) oxide is recycled to the next neutralization of fresh portion of rhenic(VII) acid, in such amount that mass of non-dissolved residue favorably is 50 %.

5. The method according to claim 1, 2, **characterized in that the** non-dissolved residue from neutralization with cobalt(II) oxide is recycled to the next neutralization of fresh portion of rhenic(VII) acid, in such amount that mass of non-dissolved residue favorably is 30 %.

6. The method according to claim 1-4, **characterized in that** the neutralization with nickel(II) oxide is carried out favorably in the first place, until pH 0.85 is achieved.

7. The method according to claim 1, 2, 5, **characterized in that** the neutralization with cobalt(II) oxide is carried out until pH 1.3 is achieved.

8. The method according to claim 1-7, **characterized in that** the final neutralization is carried out with copper(II) oxide until pH 4.10 is achieved.

9. The method according to claim 1-8, **characterized in that** the filtration of non-dissolved residues from neutralization with nickel(II) or cobalt(II) or copper(II) oxide is favorably carried out in hot conditions.

10. The method according to claim 1-9, **characterized in that** the three-stage neutralization is carried out using subsequently nickel(II) oxide, cobalt(II) oxide, and copper(II) oxide.

11. The method according to claim 1-10, **characterized in that** the alcohol washings from washing of non-dissolved residues from nickel(II) oxide neutralization are favorably recycled, to wash fresh residue from neutralization by nickel(II) oxide, minimum in 30 cycles.

12. The method according to claim 1-11, **characterized in that** the alcohol washings from washing of non-dissolved residues from neutralization with cobalt(II) oxide are favorably recycled, to wash fresh residue from neutralization with cobalt(II) oxide, for minimum 30 cycles.

13. The method according to claim 1-12, **characterized in that** the alcohol washings from washing of non-dissolved copper residues from neutralization with copper(II) oxide are favorably recycled to wash fresh copper residue from neutralization with copper(II) oxide, for minimum 50 cycles.
